# EUROPEAN PATENT APPLICATION

(11) **EP 4 556 191 A1**
(43) Date of publication of application: **21.05.2025**
(21) Application number: 24213499.7
(22) Date of filing: 18.11.2024
(51) Int. Cl.: B29B 17/00, B29B 17/04, B29K 25/00, B29L 7/00, B29B 17/02

(54) **METHOD AND DEVICE FOR PRETREATMENT OF PLASTIC WASTE, AND RESULTING AGGLOMERATE**

(30) Priority: 17.11.2023 BE 202305941
(71) Applicant: Indaver Plastics Recycling nv, 2830 Willebroek (BE)
(72) Inventor: VAN OBBERGEN, Toon, 2830 Willebroek (BE); STEVENS, Luc, 2830 Willebroek (BE)
(74) Representative: Brantsandpatents bv

(57) **Abstract**

The present invention relates to a method for the pretreatment of plastic waste comprising the steps of supplying plastic waste, wherein the plastic waste comprises at least 80% polyolefin films or at least 80% polystyrene, reducing the plastic waste in a first shredder, washing the reduced plastic waste, producing agglomerate from the reduced plastic waste, storing the agglomerate in a silo, wherein before reducing the plastic waste in the first shredder, particles smaller than 30 mm are screened from the plastic waste, after which the waste that is not polyolefin or polystyrene is removed from the plastic waste with the aid of optical separation. The invention also relates to a device for pretreatment of plastic waste and an agglomerate.

## Description

### TECHNICAL FIELD

The invention relates to a method for the pretreatment of plastic waste, more particularly plastic waste comprising at least 80 wt% polyolefin films or at least 80 wt% polystyrene. The invention also relates to a device for pre-treating plastic waste and to a resulting agglomerate.

### PRIOR ART

Plastics constitute a very significant proportion of the annual amount of waste produced by humans. In the past, this plastic waste was simply burned or dumped. Meanwhile, plastic waste has been collected and processed separately in many for many years. An example of this is the collection of PMD waste in Belgium, where PMD stands for plastic, metal, and drink cartons. The plastic waste is recycled and reprocessed into new plastic objects. A disadvantage of these recycled plastics is that they are usually of lower quality. Therefore, in recent years, much effort has been put into another method of recycling plastic waste. The plastic waste is converted by pyrolysis into purified fractions, which can then serve as basic raw materials for high-quality raw materials.

A disadvantage here is that for efficient pyrolysis, the plastic waste must predominantly consist of the same type of plastic. Contaminants in the plastic waste have a significant impact on the purity of the obtained fractions. Plastic waste collected and sorted according to current practices does not have the required composition. Additionally, the plastic waste is not in a suitable form for processing by pyrolysis. It is therefore necessary to pretreat the plastic waste. Known pretreatments include shredding and washing the plastic waste to remove impurities, resulting in a more suitable composition and form. The composition of this shredded and washed plastic waste is still suboptimal.

The present invention aims to find a solution for at least pre-treating plastic waste so that plastic waste can be efficiently processed by pyrolysis.

### SUMMARY OF THE INVENTION

In a first aspect, the present invention relates to a method according to claim 1.

This method has the advantage that the plastic waste is further sorted with an optical separator before being reduced in a first shredder and washed, so that minority fractions of materials are removed from the plastic waste as much as possible. As a result, plastic waste is obtained that consists almost entirely of plastic from the majority fraction, being polyolefin or polystyrene, allowing pyrolysis to be carried out efficiently. It is particularly advantageous that the plastic waste is screened before the optical separator, whereby particles smaller than 30 mm are removed from the plastic waste. As a result, all particles are large enough to be recognized by the optical separator and also large enough to be separated from the plastic waste in the optical separator using, for example, scoops or blow nozzles. Smaller particles can potentially be recognized by the optical separator, but cannot necessarily be separated from the plastic waste as a result, which would mean the pretreated plastic waste would still have an insufficiently uniform composition.

Preferred embodiments of the method are set out in claims 2-9.

In a second aspect, the present invention relates to a device according to claim 10.

This device has the advantage, among other things, that it includes an optical separator. As a result, the plastic waste can be further sorted using the device so that minority fractions of material can be removed from the plastic waste as much as possible, and plastic waste with a composition as uniform as possible can be obtained. It is particularly advantageous that the device also includes a screen for screening particles from the plastic waste with a size of less than 30 mm. As a result, all particles are large enough for separation from the plastic waste using the optical separator.

Preferred embodiments of the device are described in the dependent claims 11 to 14.

In a third aspect, the present invention relates to an agglomerate of plastic waste according to claim 15.

This agglomerate is particularly suitable for further processing and upgrading of plastic waste into purified fractions by means of pyrolysis. The pellets have a very suitable size for optimal filling of an extruder during the pyrolysis process and have a sufficiently uniform composition to efficiently perform the pyrolysis.

### DESCRIPTION OF THE DRAWINGS

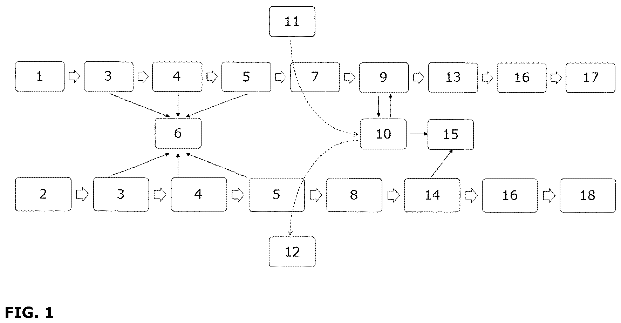

**Figure 1** shows a schematic representation of a method according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In the context of this document, an agglomerate is a material formed by compressing and fusing different plastic particles. The agglomerate is preferably in pellet form.

In the context of this document, a majority fraction in plastic waste refers to a material or group of materials that is most present based on weight percentage relative to the total weight of the plastic waste.

In the context of this document, a minority fraction in plastic waste refers to a material or group of materials of which less than 20 wt% is present relative to the total weight in the plastic waste.

In a first aspect, the invention relates to a method for the pretreatment of plastic waste.

The method comprises the steps of:
- supplying plastic waste,
- reducing the plastic waste in a first shredder,
- washing the reduced plastic waste;
- manufacturing agglomerate from the reduced plastic waste;
- storing the agglomerate in a silo.

The plastic waste is pre-sorted plastic waste from recycling and sorting centers. The plastic waste is preferably delivered in bales.

The plastic waste is, for example, composed of plastic films, such as packaging films and potato chip bags. In this case, the plastic waste comprises at least 80 wt% polyolefin films relative to the total weight of the supplied plastic waste. This means that if the plastic waste is supplied in bales, at least 80% of the total weight of a bale is polyolefin films. The polyolefin films are mainly polyethylene and polypropylene films. In this case, the polyolefin films are the majority fraction in the plastic waste.

For example, the plastic waste is composed of polystyrene plastics. In this case, the plastic waste comprises at least 80 wt% polystyrene relative to the total weight of the supplied plastic waste. Polystyrene is, in this case, the majority fraction in the plastic waste.

The plastic waste is advantageously reduced in a first shredder. This loosens impurities, such as dirt, food residues, etc. It is additionally advantageous that small particles of plastic waste can be easily formed into an agglomerate. Preferably, the plastic waste is reduced in the first shredder to particles with a maximum size of 30 mm, more preferably a maximum size of 25 mm, and even more preferably a maximum size of 20 mm.

Washing the reduced plastic waste is advantageous for removing impurities, resulting in a more uniform composition of the plastic waste. Optionally, during the washing of the plastic waste, larger particles from a minority fraction of the plastic waste are also separated based on a difference in density, so that, for example, the particles from the mentioned minority fraction sink in the water used for washing the plastic waste, while particles from the majority fraction float in the water. As a result, the composition of the washed plastic waste becomes even more uniform. Preferably, the washed plastic waste is dried.

The agglomerate is preferably manufactured in an agglomerator. The reduced and washed plastic waste is compressed and rolled together in the agglomerator. This increases the temperature of the plastic waste, and the plastic waste melts together with a higher density, lower moisture content, and more homogeneous composition than the plastic waste, after which it is cut into pellets in the agglomerator.

According to a preferred embodiment, before reducing the plastic waste in the first shredder, particles smaller than 30 mm are screened from the plastic waste, preferably particles smaller than 35 mm, more preferably particles smaller than 40 mm. Particles smaller than 30 mm refer to particles that fit within the circumference of a circle with a diameter of 30 mm.

Preferably, particles larger than 60 mm are not screened from the plastic waste, more preferably particles larger than 55 mm, even more preferably particles larger than 50 mm, and even more preferably particles larger than 45 mm. Particles larger than 60 mm refer to particles that do not fit within the circumference of a circle with a diameter of 60 mm.

After screening and before reducing the plastic waste in the first shredder, waste that is not polyolefin or polystyrene is removed from the plastic waste using optical separation. Preferably, polyolefin is removed from the plastic waste if the supplied plastic waste comprises at least 80 wt% polystyrene. Preferably, polystyrene is removed from the plastic waste if the supplied plastic waste comprises at least 80 wt% polyolefin films. This means that waste not belonging to the majority fraction is removed from the plastic waste. The plastic waste is delivered to optical sensors via a conveyor belt. Optical sensors are, for example, camera systems, infrared sensors, lasers, etc. The optical sensors identify materials in the plastic waste based on their optical properties. Examples of optical properties are color, shape, texture, density, chemical composition, etc. Materials that do not belong to majority fraction are automatically removed from the plastic waste using, for example, scoops or blow nozzles.

It will be apparent to one skilled in the art that complete removal of materials not belonging to the majority fraction is almost impossible. Preferably, after optical separation, plastic waste is obtained in which the majority fraction constitutes at least 85 wt% of the total weight of the plastic waste after optical separation, more preferably at least 90 wt%, even more preferably at least 92.5 wt%, and even more preferably at least 95 wt%.

This method has the advantage that minority fractions of materials are removed from the plastic waste as much as possible. As a result, plastic waste is obtained that consists almost entirely of plastic from the majority fraction, being polyolefin or polystyrene, allowing pyrolysis to be carried out efficiently. It is particularly advantageous that the plastic waste is screened before the optical separator, wherein particles smaller than 30 are removed from the plastic waste. As a result, all particles are large enough to be recognized by the optical separator and also large enough to be separated from the plastic waste in the optical separator using, for example, scoops or blow nozzles. Smaller particles can potentially be recognized by the optical separator, but cannot necessarily be separated from the plastic waste as a result, which would mean the pretreated plastic waste would still have an insufficiently uniform composition.

According to a preferred embodiment, the plastic waste is delivered in bales. The bales are preferably held together with metal bands. The bales are advantageous for delivering the plastic waste in a compact manner. The bales are opened and spread out using a second shredder. The second shredder is configured to cut through the metal bands, causing the bales to fall apart. By cutting the metal bands and interaction between the plastic waste and the second shredder, the plastic waste is spread out. The second shredder preferably reduces the plastic waste as little as possible. This is advantageous for obtaining sufficiently large particles of plastic waste that are suitable for treatment by optical separation.

After opening and spreading out the bales, metal is removed from the plastic waste using a magnet. The magnet is a permanent magnet or an electromagnet. Preferably, the magnet is an electromagnet. The magnet is preferably placed above a conveyor belt on which the plastic waste from the second shredder is discharged. The magnet is advantageous for removing metal that could damage parts of a device for the pretreatment of plastic waste. Metal is also an impurity in the plastic waste and is detrimental to later pyrolysis of the plastic waste. This step is particularly advantageous in the case of bales held together with metal bands, for removing the metal bands from the plastic waste.

According to one embodiment, reduced plastic waste comprising at least 80 wt% polyolefin films relative to the total weight of the supplied plastic waste is dry-washed. The reduced plastic waste is dry-washed by centrifuging the plastic waste. The plastic waste is centrifuged in a rotating perforated washing drum in the absence of water. Contaminants are flung from the plastic waste and exit the perforated washing drum through perforations in the perforated washing drum.

Dry-washing is very advantageous because no water is used for washing that would need to be treated afterward due to the contaminants. Dry-washing is additionally advantageous because the reduced plastic waste does not need to be dried afterward.

The perforations preferably have a diameter of at most 30 mm, more preferably at most 25 mm, even more preferably at most 20 mm, and even more preferably at most 15 mm.

The perforations preferably have a diameter of at least 4 mm, more preferably at least 6 mm, even more preferably at least 8 mm, and even more preferably at least 10 mm.

Perforations within this range are advantageous because the reduced plastic waste has dimensions that fall outside this range, while the perforations are sufficiently large for contaminants to easily exit the perforated washing drum.

The perforated washing drum preferably rotates at a speed of at least 400 revolutions per minute, more preferably at least 450 revolutions per minute, even more preferably at least 500 revolutions per minute, and even more preferably at least 550 revolutions per minute.

The perforated washing drum preferably rotates at a speed of at most 750 revolutions per minute, more preferably at most 700 revolutions per minute, even more preferably at most 650 revolutions per minute, and even more preferably at most 600 revolutions per minute.

The perforated washing drum rotates within this range sufficiently fast to separate contaminants from the plastic waste, but not too fast so that films are not sucked through the perforations in the perforated washing drum.

According to one embodiment, reduced plastic waste comprising at least 80 wt% polystyrene relative to the total weight of the supplied plastic waste is wet-washed. The reduced plastic waste is wet-washed in a perforated washing drum with the addition of water. Contaminants are washed from the reduced plastic waste by the water and the rotation of the perforated washing drum and carried away with the water through the perforated washing drum. Wet-washing is advantageous for brittle plastics, such as polystyrene, because wet-washing can be done at a much lower rotation speed of the washing drum. As a result, the polystyrene is not broken into many small particles that would disappear with the water through the perforated washing drum, which would lead to a loss of reusable plastic waste. Wet-washing has the disadvantage that water becomes contaminated and must be treated. The washing is done with cold water. This means that the water is not heated or cooled. This is energy-efficient. The washing is preferably done without the addition of detergents or other cleaning agents.

The perforations preferably have a diameter of at most 20 mm, more preferably at most 15 mm, and even more preferably at most 10 mm.

The perforations preferably have a diameter of at least 2 mm, more preferably at least 3 mm, even more preferably at least 4 mm, and even more preferably at least 5 mm.

Perforations within this range are advantageous because even if brittle plastic waste such as polystyrene breaks during washing, the plastic waste is unlikely to exit the perforated washing drum through the perforations, while the perforations are sufficiently large for water with washed-off contaminants to easily exit the perforated washing drum.

The perforated washing drum preferably rotates at a speed of at least 150 revolutions per minute, more preferably at least 200 revolutions per minute, even more preferably at least 250 revolutions per minute, and even more preferably at least 300 revolutions per minute.

The perforated washing drum preferably rotates at a speed of at most 500 revolutions per minute, more preferably at most 450 revolutions per minute, even more preferably at most 400 revolutions per minute, and even more preferably at most 350 revolutions per minute.

The perforated washing drum rotates within this range sufficiently fast to rinse contaminants from the plastic waste, but not too fast so that brittle plastic waste such as polystyrene does not break.

According to a preferred embodiment, the reduced plastic waste is dry- or wet-washed. Plastic waste comprising at least 80 wt% polyolefin films relative to the total weight of the supplied plastic waste is dry-washed. Plastic waste comprising at least 80 wt% polystyrene relative to the total weight of the supplied plastic waste is wet-washed. This ensures an optimal choice for washing is always made, maximizing the benefits of the two previously described embodiments.

According to a preferred embodiment, after wet-washing the reduced plastic waste, the washed and reduced plastic waste is dried by centrifugation. The drying is done completely mechanically. The reduced and washed plastic waste is not heated during drying, making the drying process energy efficient. Drying takes place in a rotating perforated drying drum. Water exits through perforations in the perforated drum. The drying can be done at a lower rotation speed and with smaller perforations than previously described for dry-washing. This makes drying by centrifugation suitable for brittle plastic waste such as polystyrene.

The perforations preferably have a diameter of at most 20 mm, more preferably at most 15 mm, and even more preferably at most 10 mm.

The perforations preferably have a diameter of at least 2 mm, more preferably at least 3 mm, even more preferably at least 4 mm, and even more preferably at least 5 mm.

Perforations within this range are advantageous because even if brittle plastic waste such as polystyrene breaks during drying, the plastic waste is unlikely to exit through the perforations of the perforated drum, while the perforations are large enough for water to easily exit the perforated drum.

The perforated washing drum preferably rotates at a speed of at least 250 revolutions per minute, more preferably at least 300 revolutions per minute, even more preferably at least 350 revolutions per minute, and even more preferably at least 400 revolutions per minute.

The perforated washing drum preferably rotates at a speed of at most 600 revolutions per minute, more preferably at most 550 revolutions per minute, even more preferably at most 500 revolutions per minute, and even more preferably at most 450 revolutions per minute.

The perforated drum rotates within this range fast enough to separate water from the plastic waste, but not too fast so that brittle plastic waste such as polystyrene does not break.

According to a preferred embodiment, the wet-washing is done with rainwater. The rainwater is collected in a rainwater reservoir, such as a tank or buffer. The rainwater is collected again after the wet-washing of the plastic waste. The rainwater is filtered, purified, and reused. In case of excess purified rainwater, used rainwater can be discharged after filtering and purification. In case of a lack of purified rainwater, it can be supplemented with tap water. By using and reusing rainwater, the use of tap water for washing the plastic waste and the ecological impact of washing can be minimized.

According to a preferred embodiment, water is added to the plastic waste that comprises at least 80 wt% polystyrene relative to the total weight of the supplied plastic waste during the reduction in the first shredder. The water is preferably the same rainwater as used during washing, as described in a previous embodiment. Polystyrene is naturally a brittle but hard type of plastic. Reducing polystyrene requires more force than reducing, for example, polyolefin films. A lot of heat is generated when reducing polystyrene. However, polystyrene has a low melting point of about 90°C. Adding water is advantageous to achieve a lower temperature in the first shredder, so that the polystyrene does not melt in the first shredder. This is additionally advantageous for extending the lifespan of the blades included in the first shredder, as the blades also operate at a lower temperature.

Preferably, the polystyrene is discharged together with the water from the first shredder, and the reduced plastic waste from the first shredder is at least partially wet-washed with the water from the first shredder, as described in a previous embodiment. This is advantageous to limit water use in the pretreatment of plastic waste.

According to a preferred embodiment, the agglomerate is formed between a pair of disks. The pair of disks includes a moving rotor disk and a stationary stator disk. The stator disk is a counter-element to the rotor disk. The reduced plastic waste is kneaded and rolled into pellets between the moving rotor disk and the stationary stator disk. During kneading and rolling, the temperature of the reduced plastic waste increases and it becomes plastic. The reduced plastic waste melts together into pellets with a higher density, lower moisture content, and a more homogeneous composition than the supplied plastic waste, as previously described.

The pellets are substantially rod-shaped with a diameter of at most 6 mm, preferably at most 5 mm. This means that the pellets are rods that fit through a circle with a diameter of at most 6 mm.

The pellets are cut to a length of at least 6 mm and at most 30 mm. The pellets are preferably cut in a drum with a rotating blade.

Preferably, the pellets are cut to a length of at least 7 mm, more preferably at least 8 mm.

Preferably, the pellets are cut to a length of at most 28 mm, more preferably at most 26 mm, even more preferably at most 24 mm, even more preferably at most 22 mm, and most preferably at most 20 mm.

This embodiment is advantageous because pellets with a higher density, lower moisture content, and a more homogeneous composition than the supplied plastic waste are obtained, which have a very suitable size for optimal filling of an extruder during a pyrolysis process. This makes the obtained agglomerate very suitable for further processing and upgrading of plastic waste into purified fractions by means of pyrolysis.

According to a preferred embodiment, the agglomerate is cooled before being stored in the silo. This is advantageous because during the formation of the agglomerate, the reduced plastic waste is melted. The agglomerate can still be sufficiently warm after formation so that it can stick together in the silo. By cooling the agglomerate before storage, this is avoided, and no bridges and associated blockages can form in the silo.

According to one embodiment, particles smaller that are screened from the plastic waste, as in a previously described embodiment, and waste that is removed from the plastic waste by optical separation and is not metal, are processed into refuse-derived fuel (RDF). Preferably, the RDF is formed into substantially rod-shaped pellets. This embodiment is advantageous for creating an additional useful stream from the plastic waste.

In a second aspect, the invention relates to a device for the pretreatment of plastic waste.

The device includes a first shredder for reducing the size of plastic waste, a washing installation for washing reduced plastic waste, an agglomerator for creating an agglomerate from the reduced plastic waste, and a silo for storing the agglomerate.

The first shredder includes a rotor with blades. The first shredder includes a motor for driving the rotor. The rotor preferably has a diameter of at least 400 mm. The motor is preferably an electric motor. The motor preferably has a power of at least 70 kW. The rotor preferably includes at least 6 blades, more preferably at least 8 blades, and even more preferably at least 10 blades. The first shredder comprises a stator with blades. The stator preferably comprises at least 3 blades, more preferably at least 4 blades. The first shredder is configured to reduce the plastic waste to particles with a maximum size of 30 mm, more preferably a maximum size of 25 mm, and even more preferably a maximum size of 20 mm.

The washing installation is positioned along a plastic waste stream through the device, after the first shredder. The washing installation comprises a perforated washing drum for washing the reduced plastic waste.

The agglomerator is positioned after the washing installation along the waste stream. The agglomerator comprises a first drum for rolling together and compressing the reduced and washed plastic waste. The first drum comprises rollers, disks, or another suitable means configured for rolling together and compressing the plastic waste. The agglomerator comprises a second drum with a rotatable blade or another suitable cutting means for cutting formed agglomerate into pellets. The agglomerator comprises a first motor for driving the rollers, the disks, or the other suitable means in the first drum and a second motor for driving the rotatable blade or the other suitable cutting means in the second drum. The first motor and the second motor are preferably electric motors. Optionally, the first motor and the second motor are the same motor.

The silo is preferably a standing silo. The silo is preferably connected to the agglomerator by means of a conduit with an outlet for agglomerate. The silo is preferably a standing silo. The silo preferably comprises an agitator to prevent bridging by agglomerate in the silo.

The first shredder, the washing installation, and the agglomerator are connected to each other along the waste stream by transport means for transporting the plastic waste. Non-limiting examples are conduits, conveyor belts, and transport screws.

According to a preferred embodiment, the device further comprises a screen for screening particles with a size of less than 30 mm from the plastic waste and an optical separator for sorting the plastic waste.

Particles less than 30 mm in size are those that fit within the circumference of a circle with a diameter of 30 mm. The screen preferably comprises screen openings that are adapted to the particles to be screened. For screening particles with a size of less than 30 mm, the screen openings are preferably circular openings with a diameter of 30 mm.

Preferably, the screen is suitable for screening particles with a size of less than 35 mm from the plastic waste, more preferably particles with a size of less than 40 mm.

Preferably, the screen is suitable for screening particles with a size of at most 60 mm from the plastic waste, more preferably particles with a size of at most 55 mm, even more preferably particles with a size of at most 50 mm, and even more preferably particles with a size of at most 45 mm.

The screen is a rotary screen, a vibrating screen, or another suitable screen. The screen is a single-layer or multi-layer screen.

The optical separator comprises optical sensors for identifying materials in the plastic waste based on their optical properties. Examples of optical properties are color, shape, texture, density, chemical composition, etc. Optical sensors are, for example, camera systems, infrared sensors, lasers, etc.

The optical separator is configured to remove materials that do not belong to a majority fraction in the plastic waste. The optical separator comprises means for removing the mentioned materials from the majority fraction. Non-limiting examples of the mentioned means are scoops and blow nozzles. Preferably, the optical separator comprises blow nozzles.

The screen is placed along the waste stream of plastic waste through the device before the optical separator, and the optical separator is placed along the waste stream before the first shredder.

The screen, the optical separator, and the first shredder are connected to each other along the waste stream by transport means for transporting the plastic waste. Non-limiting examples are conduits, conveyor belts, and transport screws.

This device has the advantage, among others, that the plastic waste is further sorted with the help of the device so that minority fractions of material can be removed as much as possible from the plastic waste, and plastic waste with as uniform a composition as possible can be obtained. Particularly advantageous is that the device also comprises a screen for screening particles from the plastic waste with a size of less than 30 mm ± 10 mm. As a result, all particles are large enough for separation from the plastic waste using the optical separator.

According to a preferred embodiment, the device comprises a second shredder for opening bales of plastic waste and a magnet for removing metal from the plastic waste.

The second shredder preferably comprises a feed hopper for supplying plastic waste. The feed hopper is preferably suitable for receiving a load of plastic waste of at least 1 m³. This is advantageous for receiving bales of plastic waste. Such bales usually have dimensions of 1 m × 1 m × 1 m. The second shredder includes a rotor with blades. The blades are suitable for cutting through metal bands. This is advantageous because bales of plastic waste are often held together with metal bands. The second shredder is therefore suitable for opening bales of plastic waste. The second shredder includes a motor for driving the rotor. The motor is preferably an electric motor. The motor preferably has a power of at least 70 kW. The rotor preferably includes at least 4 blades. The second shredder includes a stator with blades. The stator preferably includes at least 3 blades. The rotor preferably comprises at most 6 blades. The stator preferably includes at most 5 blades. The second shredder is configured to reduce the plastic waste to particles with a minimum size of 50 mm, more preferably a minimum size of 75 mm, even more preferably a minimum size of 100 mm, and even more preferably a minimum size of 150 mm. This causes as few particles as possible to be screened from the plastic waste, and the plastic waste to be mainly spread by the second shredder.

The magnet is a permanent magnet or an electromagnet. Preferably, the magnet is an electromagnet. The magnet is preferably placed above a conveyor belt on which the plastic waste from the second shredder is discharged. The magnet is advantageous for removing metal that could, for example, damage parts of the device. Metal is also an impurity in the plastic waste and is detrimental to later pyrolysis of the plastic waste. The magnet is particularly advantageous in the case where bales are held together with metal bands, for removing the metal bands from the plastic waste.

The magnet is placed immediately after the second shredder along the waste stream.

According to a preferred embodiment, the device includes a centrifuge for dry-washing of reduced waste. The centrifuge includes a rotatable perforated washing drum. The centrifuge is included in the washing installation of the device.

Perforations in the perforated washing drum preferably have a diameter of at most 30 mm, more preferably at most 25 mm, even more preferably at most 20 mm, and even more preferably at most 15 mm.

The perforations preferably have a diameter of at least 4 mm, more preferably at least 6 mm, even more preferably at least 8 mm, and even more preferably at least 10 mm.

Perforations within this range are advantageous because the reduced plastic waste has dimensions that fall outside this range, while the perforations are sufficiently large for contaminants to easily exit the perforated washing drum.

The centrifuge includes a motor for rotating the perforated washing drum. The motor is preferably an electric motor. The perforated washing drum has an adjustable rotation speed.

The adjustable rotation speed is preferably adjustable from at least 400 revolutions per minute, more preferably at least 450 revolutions per minute, even more preferably at least 500 revolutions per minute, and even more preferably at least 550 revolutions per minute.

The adjustable rotation speed is preferably adjustable up to at most 750 revolutions per minute, more preferably at most 700 revolutions per minute, even more preferably at most 650 revolutions per minute, and even more preferably at most 600 revolutions per minute.

The perforated washing drum is rotatable within this range sufficiently fast to separate contaminants from the plastic waste, but not too fast so that, for example, films are not sucked through the perforations in the perforated washing drum.

A centrifuge for dry-washing of plastic waste is very advantageous because no water is used for washing, which would have to be treated afterwards due to the contaminants. Dry-washing is additionally advantageous because the reduced plastic waste does not need to be dried afterward. Dry-washing is particularly advantageous for polyolefin films, as they do not break at the given rotation speeds.

According to one embodiment, the device includes a rotatable perforated washing drum for wet-washing of plastic waste. The rotatable perforated washing drum is included in the washing installation of the device. The perforated washing drum includes a water supply for supplying water into the perforated washing drum. The perforated washing drum includes a water discharge for discharging water from the perforated washing drum. This is advantageous for washing contaminants from the reduced plastic waste by the water and by the rotation of the perforated washing drum.

Perforations in the perforated washing drum preferably have a diameter of at most 20 mm, more preferably at most 15 mm, and even more preferably at most 10 mm.

The perforations preferably have a diameter of at least 2 mm, more preferably at least 3 mm, even more preferably at least 4 mm, and even more preferably at least 5 mm.

Perforations within this range are advantageous because even if brittle plastic waste such as polystyrene breaks during washing, the plastic waste is unlikely to exit the perforated washing drum through the perforations, while the perforations are sufficiently large for water with washed-off contaminants to easily exit the perforated washing drum.

The perforated washing drum includes a motor for rotating the perforated washing drum. The motor is preferably an electric motor. The perforated washing drum has an adjustable rotation speed.

The adjustable rotation speed is preferably adjustable from at least 150 revolutions per minute, more preferably at least 200 revolutions per minute, even more preferably at least 250 revolutions per minute, and even more preferably at least 300 revolutions per minute.

The adjustable rotation speed is preferably adjustable up to at most 500 revolutions per minute, more preferably at most 450 revolutions per minute, even more preferably at most 400 revolutions per minute, and even more preferably at most 350 revolutions per minute.

The perforated washing drum is rotatable within this range sufficiently fast to rinse contaminants from the plastic waste, but not too fast so that brittle plastic waste such as polystyrene does not break.

Wet-washing is advantageous for brittle plastics, such as polystyrene, because wet-washing can be done at a much lower rotation speed of the washing drum. As a result, the polystyrene is not broken into many small particles that would disappear with the water through the perforated washing drum, which would lead to a loss of reusable plastic waste. Wet-washing has the disadvantage that water becomes contaminated and must be treated.

According to one embodiment, the washing installation includes a centrifuge for dry-washing of plastic waste and a rotatable washing drum for wet-washing of plastic waste. The centrifuge and the rotatable washing drum are as previously described. This embodiment is advantageous because, depending on the majority fraction in the plastic waste, the most optimal washing method can be chosen.

The device includes a rainwater reservoir and a water treatment plant. The rainwater reservoir is, for example, a tank or a basin. The washing installation is connected to the rainwater reservoir via a supply line for water supply. The washing installation is connected to the water treatment plant via a discharge line for cleaning used water. The water treatment plant is connected to the reservoir using a return line for water reuse. Preferably, the device includes a supply for tap water. This is advantageous if there is a shortage of purified rainwater. Preferably, the device includes a discharge for disposing of treated water in the event of an excess of purified rainwater. This embodiment is advantageous to minimize the use of tap water for washing plastic waste and to reduce the ecological impact of washing.

According to a preferred embodiment, the device includes a centrifuge for mechanically drying washed plastic waste. The centrifuge includes a rotatable perforated drying drum.

Perforations in the perforated drying drum preferably have a diameter of at most 20 mm, more preferably at most 15 mm, and even more preferably at most 10 mm.

The perforations preferably have a diameter of at least 2 mm, more preferably at least 3 mm, even more preferably at least 4 mm, and even more preferably at least 5 mm.

Perforations within this range are advantageous because even if brittle plastic waste such as polystyrene breaks during drying, the plastic waste is unlikely to exit through the perforations of the perforated drying drum, while the perforations are large enough to allow water to easily exit the perforated drying drum.

The centrifuge includes a motor for rotating the perforated drying drum. The motor is preferably an electric motor. The perforated drying drum has an adjustable rotation speed.

The adjustable rotation speed is preferably adjustable from at least 250 revolutions per minute, more preferably at least 300 revolutions per minute, even more preferably at least 350 revolutions per minute, and even more preferably at least 400 revolutions per minute.

The adjustable rotation speed is preferably adjustable up to at most 600 revolutions per minute, more preferably at most 550 revolutions per minute, even more preferably at most 500 revolutions per minute, and even more preferably at most 450 revolutions per minute.

The perforated drying drum is rotatable within this range fast enough to separate water from the plastic waste, but not too fast so that brittle plastic waste such as polystyrene does not break.

The centrifuge preferably does not include a heating element, supply of warm air, or any other means for heating the perforated drying drum. This is advantageous for the energy-efficient drying of the plastic waste.

According to a preferred embodiment, the agglomerator in the first drum includes a pair of disks. The pair of disks includes a rotatable rotor disk and a stationary stator disk. The stator disk is a counter-element to the rotor disk.

The rotor disk and the stator disk are suitable for kneading and rolling reduced plastic waste into pellets.

One skilled in the art will appreciate that a method according to the first aspect is preferably performed with a device according to the second aspect and that a device according to the second aspect is preferably configured for performing a method according to the first aspect. Each feature described in this document, both above and below, can therefore relate to any of the three aspects of the present invention.

In a third aspect, the invention relates to an agglomerate of plastic waste obtained by carrying out a method according to the first aspect and/or by using a device according to the second aspect.

The agglomerate has a density of at least 250 kg/m³, preferably at least 300 kg/m³, more preferably at least 350 kg/m³.

The agglomerate consists of pellets with a length of at least 6 mm and at most 30 mm. The pellets are substantially rod-shaped.

Preferably, the length of the pellets is at least 7 mm, more preferably at least 8 mm.

Preferably, the length of the pellets is at most 28 mm, more preferably at most 26 mm, even more preferably at most 24 mm, even more preferably at most 22 mm, and most preferably at most 20 mm.

The agglomerate consists of pellets with a diameter of at most 6 mm, preferably at most 5 mm. This means that the pellets are rods that fit through a circle with a diameter of at most 6 mm.

The agglomerate has a pellet particle size distribution wherein 90% of the pellets have a length of less than 10 mm, preferably 91%, more preferably 92%, even more preferably 93%, even more preferably 94% and most preferably 95%.

The agglomerate has a purity of at least 90 wt% polyolefin or at least 90 wt% polystyrene relative to a total weight of the agglomerate.

This agglomerate is particularly suitable for further processing and upgrading of plastic waste into purified fractions by means of pyrolysis. The pellets have a very suitable size for optimal filling of an extruder during the pyrolysis process and have a sufficiently uniform composition to efficiently perform the pyrolysis.

In what follows, the invention is described by means of a non-limiting figure illustrating the invention, and which is not intended to or should not be construed as limiting the scope of the invention.

### DESCRIPTION OF THE DRAWINGS

**Figure 1** shows a schematic representation of a method according to an embodiment of the present invention.

In step (1), plastic waste comprising at least 80 wt% polystyrene relative to a total weight of supplied plastic waste is supplied. The plastic waste is supplied in bales wrapped with metal bands. In step (2), plastic waste comprising at least 80 wt% polyolefin films relative to a total weight of supplied plastic waste is supplied. This plastic waste is also supplied in bales wrapped with metal bands. Steps (1) and (2) can be performed sequentially, wherein a device for the pretreatment of plastic waste first processes all plastic waste supplied in step (1) or step (2), and then processes all plastic waste supplied in step (2), respectively step (1). It is clear that plastic waste can be supplied several times according to step (1) before plastic waste is supplied according to step (2) and vice versa. In this embodiment, steps (1) and (2) are performed simultaneously. The device in this embodiment comprises two lines, wherein a first line processes the plastic waste supplied in step (1), and a second line processes the plastic waste supplied in step (2). Certain steps are the same for both the first line and the second line and are indicated with the same reference number. These steps are discussed only once. The bales of plastic waste are opened and spread out in a second shredder in steps (1) and (2). In step (3), metals, including the metal bands that held the bales together, are removed from the plastic waste using a magnet. In step (4), particles smaller than 30 mm are screened out of the plastic waste. In step (5), waste that is not polyolefin films or polystyrene is removed from the plastic waste using optical separation. Metals, particles smaller than 30 mm, and waste that is not polyolefin or polystyrene are discharged as residue in step (6) and further processed. Metals are separately discharged for processing, while particles smaller than 30 mm and waste that is not polyolefin or polystyrene are discharged for processing into refuse-derived fuel. In step (7), the plastic waste with polystyrene as the majority fraction is reduced in size to particles with a maximum dimension of 30 mm in a first shredder. Water is added in the first shredder. Then, in step (9), the plastic waste is wet-washed in a rotating washing drum with the addition of water. The water comes from step (10) where rainwater is collected and supplied to the rotating washing drum, and where used water from the rotating washing drum is treated in a water treatment plant in step (10). In case of a shortage of purified rainwater, the rainwater can be supplemented with tap water in step (11). In case of an excess of purified rainwater, treated rainwater can be discharged in step (12). Sludge resulting from the treatment of the water is discharged for processing in step (15). After wet-washing in step (9), the plastic waste is dried by centrifugation in step (13). The plastic waste is not heated during this process. In step (8), the plastic waste with polyolefin films as the majority fraction is reduced in size to particles with a maximum dimension of 30 mm in a first shredder. No water is added in the first shredder. Then, in step (14), the plastic waste is dry-washed by centrifuging the plastic waste. No water is added during this process. Contaminants separated from the plastic waste in step (14) is removed in step (15) for further processing. In step (16), an agglomerate is made from the reduced, washed, and possibly dried plastic waste. The agglomerate has a density of at least 250 kg/m³. The agglomerate consists of pellets with a length of at least 6 mm. The agglomerate has a pellet particle size distribution where 90% of the pellets have a length of less than 10 mm. The agglomerate made from plastic waste with polystyrene as the majority fraction has a purity of at least 90 wt% polystyrene relative to the total weight of the agglomerate. This agglomerate is stored in a first silo after cooling in step (17). The agglomerate made from plastic waste with polyolefin films as the majority fraction has a purity of at least 90 wt% polyolefin relative to the total weight of the agglomerate. This agglomerate is stored in a separate second silo after cooling in step (18).

## Claims

1. Method for pretreatment of plastic waste comprising the steps of:
- supplying plastic waste, wherein the plastic waste comprises at least 80 wt% polyolefin films or at least 80 wt% polystyrene;
- reducing the plastic waste in a first shredder;
- washing the reduced plastic waste;
- manufacturing agglomerate from the reduced plastic waste;
- storing the agglomerate in a silo;
**characterized in that,** before the plastic waste is reduced in the first shredder, particles smaller than 30 mm are screened from the plastic waste, after which the waste that is not polyolefin or polystyrene is removed from the plastic waste with the aid of optical separation.

2. The method according to claim 1, **characterized in that** the plastic waste is supplied in bales, wherein the bales are opened and spread out using a second shredder, after which metal is removed from the plastic waste using a magnet.

3. The method according to claim 1 or 2, **characterized in that** the reduced plastic waste is dry- or wet-washed, wherein plastic waste comprising at least 80 wt% polyolefin films is dry-washed and wherein plastic waste comprising at least 80 wt% polystyrene is wet-washed.

4. The method according to claim 3, **characterized in that** after the wet-washing of the reduced plastic waste, the washed and reduced plastic waste is dried by centrifugation.

5. The method according to any of the preceding claims 3-4, **characterized in that** the wet-washing is done with rainwater, wherein the rainwater is collected, filtered, purified, and reused after the wet-washing.

6. The method according to claim 3, **characterized in that** the reduced plastic waste is dry-washed by centrifuging the plastic waste.

7. The method according to any of the preceding claims 1-6, **characterized in that** water is added to plastic waste comprising at least 80 wt% polystyrene during the reduction in the first shredder.

8. The method according to any of the preceding claims 1-7, **characterized in that** the agglomerate is formed between a pair of disks, comprising a moving rotor disk and a stationary stator disk, wherein the stator disk is a counter element for the rotor disk, wherein the reduced plastic waste is kneaded and rolled between the disks into pellets with a diameter of at most 6 mm and wherein the pellets are cut to a length of at least 6 mm and at most 30 mm.

9. The method according to any of the preceding claims 1-8, **characterized in that** the agglomerate is cooled before being stored in the silo.

10. Device for the pretreatment of plastic waste comprising a first shredder for reducing the plastic waste, a washing installation for washing reduced plastic waste, an agglomerator for creating an agglomerate from the reduced plastic waste, and a silo for storing the agglomerate, **characterized in that** the device further comprises a screen for screening particles with a size of less than 30 mm from the plastic waste and an optical separator for sorting the plastic waste, wherein along to a plastic waste stream through the device the screen is placed before the optical separator and the optical separator is placed before the first shredder.

11. The device according to claim 10, **characterized in that** the device comprises a second shredder for opening bales of plastic waste and a magnet for removing metal from the plastic waste, wherein the magnet is placed immediately after the second shredder along the waste stream.

12. The device according to claim 10 or 11, **characterized in that** the device comprises a centrifuge for the dry-washing of reduced waste.

13. The device according to claim 10, 11, or 12, **characterized in that** the device comprises a rainwater reservoir and a water treatment plant, wherein the washing installation is connected to the rainwater reservoir by a supply line for the supply of water, wherein the washing installation is connected to the water treatment plant by a discharge line for cleaning used water and wherein the water treatment plant is connected to the reservoir for the reuse of water by a return line.

14. The device according to any of the claims 10-13, **characterized in that** the device comprises a centrifuge for the mechanical drying of washed plastic waste.

15. Agglomerate of plastic waste obtained by carrying out a method according to any of the claims 1-9 and/or by using a device according to any of the claims 10-14, wherein the agglomerate has a density of at least 250 kg/m³, wherein the agglomerate is pellets with a length of at least 6 mm and at most 30 mm and with a diameter of at most 6 mm, wherein the agglomerate has a pellet particle size distribution wherein 90% of the pellets have a length of less than 10 mm and wherein the agglomerate has a purity of at least 90 wt% polyolefin or at least 90 wt% polystyrene.
